Europäisches Patentamt

European Patent Office

Office européen des brevets

(19)

(11) Numéro de publication : **0 117 776**
**B1**

(12) **FASCICULE DE BREVET EUROPÉEN**

(45) Date de publication du fascicule du brevet :
06.05.87

(21) Numéro de dépôt : 84400139.6

(22) Date de dépôt : 20.01.84

(51) Int. Cl.⁴ : **F 16 B 39/38**, F 16 D   1/08,
B 62 D   1/16

(54) **Collier à vis de serrage muni d'un dispositif de freinage.**

(30) Priorité : 02.02.83 FR 8301633

(43) Date de publication de la demande :
05.09.84 Bulletin 84/36

(45) Mention de la délivrance du brevet :
06.05.87 Bulletin 87/19

(84) Etats contractants désignés :
DE GB IT

(56) Documents cités :
CH-A-   349 452
FR-A-   613 234
FR-A- 1 471 002
US-A- 2 390 662

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Lemaire, Philippe**
**49 Boulevard Rose**
**F-78300 Poissy (FR)**

(74) Mandataire : **Moncheny, Michel et al**
**c/o Cabinet Lavoix 2 Place d'Estienne d'Orves**
**F-75441 Paris Cedex 09 (FR)**

## Description

Cette invention concerne un collier propre à entourer partiellement une pièce de forme générale cylindrique et à enserrer cette pièce au moyen d'une vis qui traverse, orthogonalement à l'axe de la pièce, deux pattes à peu près parallèles du collier, et dont la tête prend appui sur la face extérieure de l'une des pattes.

Un tel collier tel que décrit dans le brevet FR-A-1 471 002 peut, par exemple, être disposé ou formé à l'extrémité d'un arbre tubulaire emmanché sur l'extrémité d'un second arbre constituant la pièce à enserrer. Ces arbres sont éventuellement accouplés positivement par des dentelures complémentaires, prévues auxdites extrémités et font, par exemple, partie d'une colonne de direction de véhicule automobile.

Pour être peu coûteux et légers, les colliers du type en question sont avantageusement réalisés à partir d'un flan de tôle. Les pattes sont alors de préférence renforcées par repliage sur elle-même d'une extension du flan de tôle.

La vis coopère habituellement avec un écrou en appui sur la face extérieure de la patte la plus éloignée de la tête de la vis, et un moyen évitant le desserrage de la vis est généralement prévu, tel qu'un contre-écrou ou une rondelle-frein. Il en résulte un encombrement radial notable et parfois gênant, notamment lorsque le collier équipe un arbre tournant au voisinage d'autres organes, ce qui est le cas de la colonne de direction évoquée ci-dessus.

Le brevet CH-A-349 452 décrit un écrou dont la tête est prolongée par une collerette annulaire rabattue sur toute sa périphérie vers l'axe de l'écrou, pour délimiter un filet destiné à freiner la vis coopérant avec l'écrou. Cependant, le rabat de la collerette annulaire ne peut s'effectuer qu'en entraînant un rétreint du métal, avec un risque important de formation de plis ce qui constitue un premier inconvénient sérieux. Par ailleurs, avec un tel agencement la longueur du filet de freinage est nécessairement limitée et le freinage ne peut être très efficace, ce qui est indispensable dans le cas d'un collier notamment lorsque ce dernier est intégré à une colonne de direction.

L'invention a pour but de réaliser un collier muni d'un dispositif de freinage qui soit simple, efficace et peu encombrant radialement.

Elle a pour objet un collier en U réalisé à partir d'un flan de tôle, comportant deux pattes percées chacune d'un trou pour le passage d'une vis de serrage, caractérisé en ce que l'une des pattes est repliée pour former deux portions à peu près parallèles dans lesquelles sont ménagés deux orifices à filetage interne pouvant coopérer avec la vis de serrage, ces deux filetages internes étant, à l'état libre, légèrement décalés l'un par rapport à l'autre, axialement et/ou angulairement.

Suivant d'autres caractéristiques de l'invention :

les filetages internes des deux portions de la patte sont décalés l'un par rapport à l'autre par déformation permanente du pli, après taraudage ;

les filetages internes des deux portions de la patte sont décalés l'un par rapport à l'autre par rappel élastique entre les deux portions de la patte, après taraudage dans une position où lesdites portions sont écartées avec déformation élastique du pli ;

un prolongement du flan de tôle est enroulé totalement pour constituer un embout tubulaire ;

le collier est exécuté dans l'extrémité d'un tube et comporte une patte pliée obtenue à partir d'une extension axiale de la paroi du tube.

Divers exemples de réalisation et de mise en œuvre de l'invention sont décrits ci-après, avec référence aux dessins annexés parmi lesquels :

la Figure 1 est une vue latérale d'un collier accouplant deux arbres ;

la Figure 2 est une vue en coupe suivant la ligne 2-2 de la Fig. 1 ;

les Figures 3 et 5 sont des vues en coupe, analogues à la Fig. 2, à plus grande échelle, d'une partie du collier respectivement en position d'utilisation et en position de repos ;

la Figure 6 est une vue en perspective d'un collier selon un autre mode de réalisation.

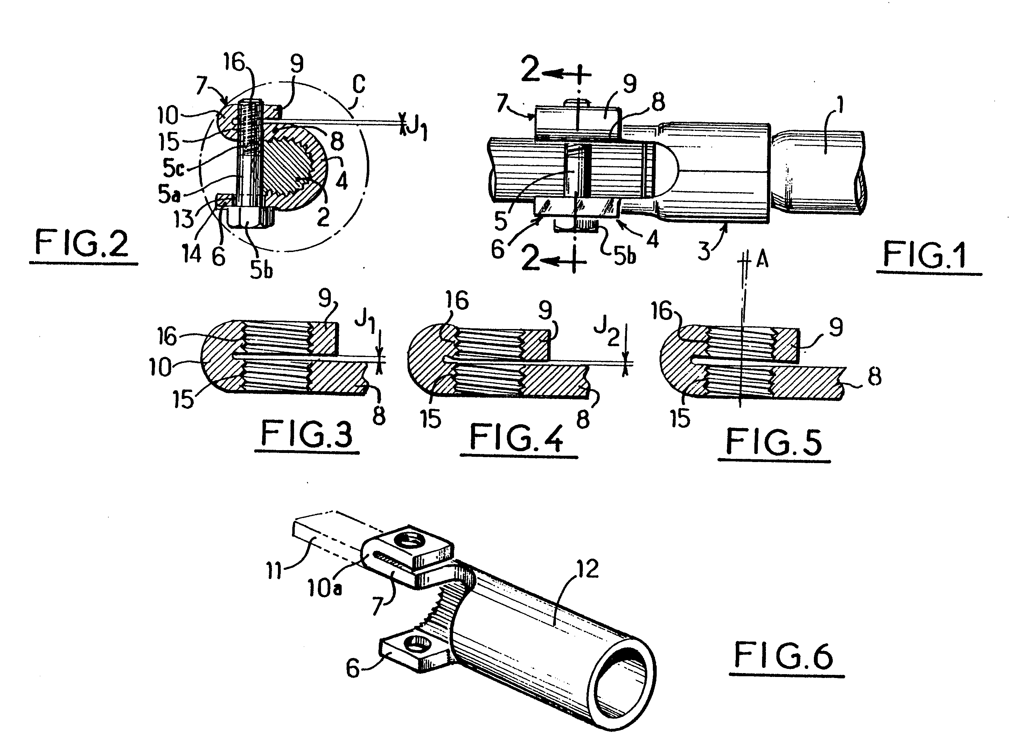

On voit sur la Fig. 1, solidaire d'un arbre 1 et accouplé à un second arbre 2, un embout partiellement tubulaire 3 dont un prolongement axial constitue un collier 4 entourant partiellement et enserrant l'extrémité dentelée de l'arbre 2 au moyen d'une vis 5 disposée orthogonalement à l'axe des deux arbres.

L'embout 3 est réalisé dans un flan de tôle enroulé totalement au droit de sa portion tubulaire, et enroulé seulement en U au niveau du collier. L'une 6 des branches de ce U est relativement courte et constitue une première patte du collier. L'autre branche, formant initialement une extension relativement longue, est repliée sur elle-même, parallèlement à la première patte de manière à constituer une deuxième patte 7 comportant deux portions 8, 9 de flan de tôle reliées par un pli 10 parallèle à l'axe des arbres. Selon une variante de réalisation, visible à la Fig. 6, l'extension 11 est parallèle à l'axe et le pli 10a est orthogonal à ce dernier ; le collier peut alors être formé à partir d'un flan découpé dans la paroi de l'extrémité d'un tube 12.

La surface intérieure du collier est munie de dentelures complémentaires de celles de l'arbre 2.

La tige 5a de la vis 5 traverse la première patte 6 par un trou 13, et sa tête 5b prend appui sur la face extérieure 14 de cette patte.

La partie filetée 5c de la vis coopère avec un trou 15, 16 taraudé dans chacune des portions 8, 9 de la patte 7. Comme on le voit à la Fig. 2, ces deux portions sont maintenues écartées (jeu J1) par la vis ; le pli est alors légèrement déformé élastiquement de manière à exercer une force de pincement tendant à rapprocher l'une de l'autre les deux portions 8, 9. La patte 7 est à cet effet telle qu'avant montage de la vis, les portions 8 et 9 étant au repos, espacées d'un jeu inférieur à J1, le filetage du trou 15 de l'une d'elles est décalé axialement et/ou angulairement par rapport au filetage du trou 16 de l'autre.

Pour obtenir ce résultat, le taraudage des deux trous 15, 16 est exécuté simultanément en maintenant écartées les deux portions (Fig. 3) dans la position d'utilisation requise, c'est-à-dire avec un jeu J1.

Dans un premier mode de réalisation, ce maintien du jeu J1 s'effectue sans déformation élastique du pli 10, puis ce dernier est écrasé de manière à subir une déformation permanente provoquant un léger rapprochement axial des deux portions 8, 9 (Fig. 4), le jeu entre elles devenant J2 inférieur à J1 et éventuellement nul.

Dans un second mode de réalisation, le maintien du jeu J1 pendant l'opération de taraudage s'effectue en écartant l'une de l'autre les deux portions 8, 9 avec déformation élastique du pli 10 ; après cette opération, les deux portions se rapprochent l'une de l'autre, par rappel élastique de la déformation du pli, jusqu'à leur position de repos, dans laquelle le filetage du trou 16 se trouve légèrement décalé angulairement (angle A à la Fig. 5) par rapport à celui du trou 15.

Dans tous les cas, lors de l'engagement de la vis dans le collier, sa rotation dans le filetage 15 la déplace axialement de sorte que l'extrémité de sa tige filetée, atteignant la portion 9, la pousse et l'écarte de la portion 8 jusqu'à ce que l'écartement entre ces deux portions soit égal au jeu J1. Dès lors les filetages respectifs des deux trous 15, 16 correspondent à une même hélice, la vis s'engage et se visse dans le trou 16. Dès ce moment, les deux portions 8, 9 sont maintenues écartées au jeu J1 par la vis à l'encontre d'une force de pincement due à la déformation élastique du pli consécutive à l'écartement des deux portions, force qui provoque, au droit du filetage, un freinage s'opposant à la rotation de la vis, donc évitant son desserrage.

Dans l'exemple ci-desus, le collier 4 est solidaire d'une portion tubulaire 3 d'un embout d'arbre. Il va de soi qu'en variante un collier séparé, découpé dans un flan de tôle uniquement enroulé en U, peut être réalisé avec des pattes telles que celles-ci sus-référencées 6 et 7.

Les colliers qui viennent d'être décrits sont particulièrement simples à réaliser, ne nécessitent aucune pièce complémentaire pour assurer le freinage de la vis, et leur encombrement radial (cercle C à la Fig. 2) est relativement faible.

Le même dispositif de freinage peut bien entendu être utilisé dans d'autres applications.

## Revendications

1. Collier en U réalisé à partir d'un flan de tôle, comportant deux pattes (6, 7) percées chacune d'un trou (13, 15) pour le passage d'une vis de serrage (5), caractérisé en ce que l'une des pattes (7) est repliée (en 10 ou 10a) pour former deux portions (8, 9) à peu près parallèles dans lesquelles sont ménagés deux orifices à filetage interne (15, 16) pouvant coopérer avec la vis de serrage, ces deux filetages internes étant, à l'état libre, légèrement décalés l'un par rapport à l'autre, axialement et/ou angulairement.

2. Collier suivant la revendication 1, caractérisé en ce que les filetages internes (15, 16) des deux portions (8, 9) de la patte (7) sont décalés l'un par rapport à l'autre par déformation permanente du pli (10), après taraudage.

3. Collier suivant la revendication 1, caractérisé en ce que les filetages internes (15, 16) des deux portions (8, 9) de la patte (7) sont décalés l'un par rapport à l'autre par rappel élastique entre les deux portions de la patte, après taraudage dans une position où lesdites portions sont écartées avec déformation élastique du pli (10).

4. Collier suivant la revendication 1, caractérisé en ce que le pli (10) reliant les deux portions (8, 9) de la patte (7) s'étend parallèlement à l'axe du collier (4).

5. Collier suivant la revendication 1, caractérisé en ce que le pli (10) reliant les deux portions (8, 9) de la patte (7) s'étend orthogonalement à l'axe du collier (4).

6. Collier suivant la revendication 1, caractérisé en ce qu'un prolongement du flan de tôle est enroulé totalement pour constituer un embout tubulaire (3).

7. Collier suivant la revendication 1, caractérisé en ce que le collier (4) est exécuté dans l'extrémité fendue d'un tube (12) et comporte une patte pliée (7) obtenue à partir d'une extension axiale de la paroi du tube.

## Claims

1. A U-sectioned collar made from a sheet blank, comprising two tabs (6, 7) each provided with an aperture (13, 14) for the passage of a clamping screw (5), characterised in that one of the tabs (7) is folded (at 10 or 10a) so as to form two roughly parallel portions (8, 9) in which are formed two apertures having an internal screwthread (15, 16) cooperable with the clamping screw, these two internal screwthreads being, in the free state, slightly offset relative to each other axially and/or angularly.

2. A collar according to claim 1, characterised in that the internal screwthreads (15, 16) of the two portions (8, 9) of the tab (7) are offset relative to each other by a permanent deformation of the fold (10) after tapping.

3. A collar according to claim 1, characterised in that the internal screwthreads (15, 16) of the two portions (8, 9) of the tab (7) are offset relative to each other by an elastic return between the two portions of the tab, after tapping in a position in which said portions are spread apart with an elastic deformation of the fold (10).

4. A collar according to claim 1, characterised in that the fold (10) interconnecting the two portions (8, 9) of the tab (7) extends in a direction parallel to the axis of the collar (4).

5. A collar according to claim 1, characterised in that the fold (10) interconnecting the two portions (8, 9) of the tab (7) extends in a direction orthogonal to the axis of the collar (4).

6. A collar according to claim 1, characterised in that an extension of the sheet blank is completely rolled so as to constitute a tubular end portion (3).

7. A collar according to claim 1, characterised in that the collar (4) is formed in the split end of a tube (12) and includes a folded tab (7) obtained from an axial extension of the wall of the tube.

**Patentansprüche**

1. Aus einem Blechschnitt gebildete U-förmige Schelle, die zwei jeweils von einem Loch (13, 15) zur Durchführung einer Klemmschraube (5) durchsetzte Laschen (6, 7) aufweist, dadurch gekennzeichnet, daß die eine der Laschen (7) zur Bildung von zwei etwa parallelen Abschnitten (8, 9), in denen zwei Öffnungen mit Innengewinde (15, 16), die mit der Klemmschraube zusammenwirken können, ausgebildet sind, gefaltet ist (bei 10 oder 10a), wobei diese beiden Innengewinde im freien Zustand axial und/oder winkelmäßig leicht gegeneinander versetzt sind.

2. Schelle nach Anspruch 1, dadurch gekennzeichnet, daß die Innengewinde (15, 16) der beiden Abschnitte (8, 9) der Lasche (7) durch bleibende Verformung der Falte (10) nach dem Gewindeschneiden gegeneinander versetzt sind.

3. Schelle nach Anspruch 1, dadurch gekennzeichnet, daß die Innengewinde (15, 16) der beiden Abschnitte (8, 9) der Lasche (7) durch elastische Rückstellung zwischen den beiden Abschnitten der Lasche nach dem Gewindeschneiden in eine Stellung, wo die Abschnitte mit elastischer Verformung der Falte (10) gespreizt sind, gegeneinander versetzt sind.

4. Schelle nach Anspruch 1, dadurch gekennzeichnet, daß die die beiden Abschnitte (8, 9) der Lasche (7) verbindende Falte (10) sich parallel zur Achse der Schelle (4) erstreckt.

5. Schelle nach Anspruch 1, dadurch gekennzeichnet, daß die die beiden Abschnitte (8, 9) der Lasche (7) verbindende Falte (10) sich senkrecht zur Achse der Schelle (4) erstreckt.

6. Schelle nach Anspruch 1, dadurch gekennzeichnet, daß ein Fortsatz des Blechschnitts zur Bildung eines rohrförmigen Ansatzes (3) vollständig eingerollt ist.

7. Schelle nach Anspruch 1, dadurch gekennzeichnet, daß die Schelle (4) im geschlitzten Ende eines Rohres (12) ausgeführt ist und eine gefaltete Lasche (7) aufweist, die aus einer axialen Erstreckung der Wand des Rohres gewonnen ist.

FIG.1

FIG.2

FIG.3

FIG.4

FIG.5

FIG.6